# EUROPEAN PATENT APPLICATION

(11) **EP 2 267 296 A2**
(43) Date of publication of application: **29.12.2010**
(21) Application number: 09173580.3
(22) Date of filing: 21.10.2009
(51) Int. Cl.: F03B 17/02

(54) **Electricity generating apparatus using bubble buoyancy**

(30) Priority: 25.06.2009 KR 20090056794; 25.09.2009 KR 20090090843
(71) Applicant: Gu Co, Ltd., Hwaseong-si, Kyunggi-do (KR)
(72) Inventor: Lee, Jong-Rai, Kyunggi-do (KR); Lee, Gi-Rak, Kyunggi-do (KR)
(74) Representative: Becker Kurig Straus

(57) **Abstract**

An electricity generating apparatus is disclosed. The electricity generating apparatus is connected to a diffuser for purifying the quality of water in an area with a certain depth of water such as a river, a lake, a farm, a wastewater treatment plant, etc., generates electricity while being operated by bubbles and the buoyancy of a water stream, generated in the diffuser, and thus supplies the produced electricity to the diffuser, so that the diffuser can purify the quality of water. The electricity generating apparatus includes: a turbine shaft installed in a vertical direction; a cylindrical turbine including supports, one end of each of the supports being connected with the turbine shaft, and an internal fixed plate and an external fixed plate being formed at regular intervals at the other end of each of the supports; a plurality of turbine blades, formed between the internal fixed plate and the external fixed plate, for rotating the turbine shaft by using the rise of bubbles jetted from the diffuser and the force of water stream; and a generator, connected with a driving gear formed at an upper end of the turbine shaft, for generates electricity when the turbine shaft is rotated.

## Description

### BACKGROUND OF THE INVENTION

### 1. Field of the Invention

The present invention relates to an electricity generating apparatus using bubble buoyancy and, more particularly, to an electricity generating apparatus that is connected to a diffuser for purifying the quality of water in an area with a certain depth of water such as a river, a lake, a farm, a wastewater treatment plant, etc., generates electricity while being operated by bubbles and the buoyancy of a water stream, generated in the diffuser, and thus supplies the produced electricity to the diffuser, so that the diffuser can purify the quality of water.

### 2. Description of the Related Art

Industrial development has lead to server environmental pollution which threatens human existence, and in particular, causes soil pollution as well as the pollution of underground water, rivers, lakes, farms, due to the discharge of household sewage, industrial sewage, livestock waste, etc., and in order to solve the problem, a great deal of research, development and investment is being conducted.

Thus, in an effort to solve this problem, a water purifying apparatus is used to improve quality of water. The water purifying apparatus includes a blower that sucks external air, an air pipe connected with the blower that supplies air that has been sucked through the blower to an air distribution container, and a diffuser formed with a certain length at the side of the air distribution container that supplies oxygen by discharging air underwater through the air distribution container, to thus purify water.

The water can be purified by supplying oxygen underwater by using the water purifying apparatus, for which, however, many peripheral devices must be operated, thereby increasing power consumption. In addition, because an electricity generating apparatus is not provided, it is impossible to effectively save and manage energy.

Photovoltaic power generation, wind power generation, tidal power generation, and the like may be used as an electricity generating apparatus according to generation purposes, but these electricity generating apparatus vary according to natural factors, so the electricity generating efficiency is low and the devices frequently break down.

### SUMMARY OF THE INVENTION

The present invention has been made in view of the above problems, and provides an electricity generating apparatus that is connected to a diffuser for purifying the quality of water in an area with a certain depth of water such as a river, a lake, a farm, a wastewater treatment plant, etc., generates electricity while being operated by bubbles and the buoyancy of a water stream, generated in the diffuser, and thus supplies the produced electricity to the diffuser, so that the diffuser can purify the quality of water.

In accordance with an exemplary embodiment of the present invention, the present invention provides an electricity generating apparatus including: a turbine shaft installed in a vertical direction; a cylindrical turbine including supports, one end of each of the supports being connected with the turbine shaft, and an internal fixed plate and an external fixed plate being formed at regular intervals at the other end of each of the supports; a plurality of turbine blades, formed between the internal fixed plate and the external fixed plate, for rotating the turbine shaft by using the rise of bubbles jetted from the diffuser and the force of water stream; and a generator, connected with a driving gear formed at an upper end of the turbine shaft, for generates electricity when the turbine shaft is rotated. The electricity generating apparatus is operated by the diffuser used for purifying the quality of water in a water tank, a farm, a wastewater treatment plant, a lake, etc., to generate electricity and purify the quality of water.

### BRIEF DESCRIPTION OF THE DRAWINGS

The features and advantages of the present invention will become more apparent from the following detailed description in conjunction with the accompanying drawings, in which:
FIG. 1 illustrates an installation and a usage state of an electricity generating apparatus using bubble buoyancy according to an embodiment of the present invention; and
FIG. 2 is a perspective view of a major part of the electricity generating apparatus according to an embodiment of the present invention.

### <Brief Description of Symbols in the Drawings>

- 100:: electricity generating apparatus
- 120:: internal fixed plate
- 130:: external fixed plate
- 140:: supports
- 150:: turbine blades
- 160:: driving gear
- 170:: generator
- 180:: turbine
- 200:: blower
- 210:: air pipe
- 220:: air distribution container
- 230:: diffuser

### DETAILED DESCRIPTION OF THE INVENTION

The present invention will now be described in detail, with reference to the accompanying drawings.

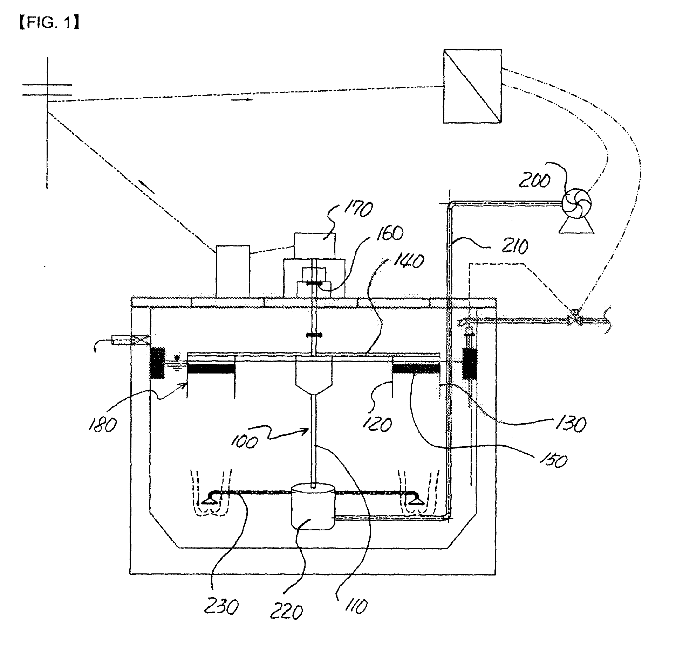

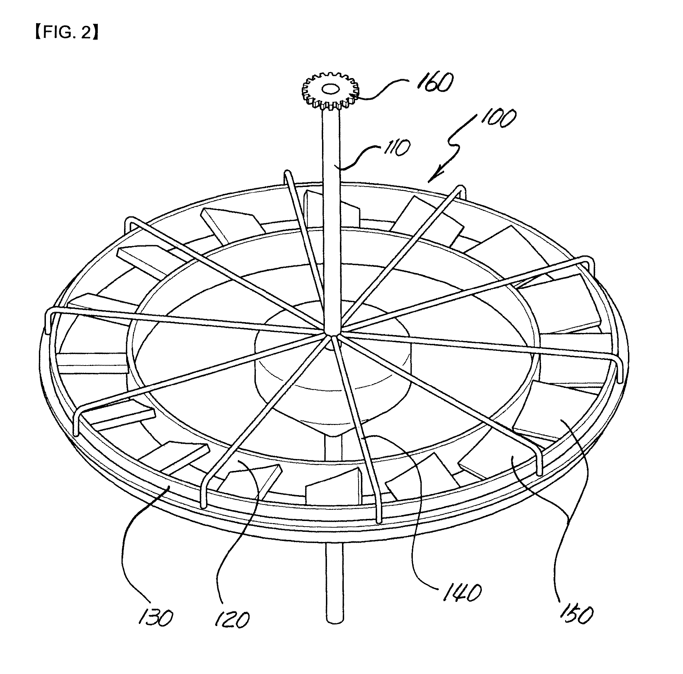

FIG. 1 illustrates an installation and a usage state of an electricity generating apparatus using bubble buoyancy according to an embodiment of the present invention, and FIG. 2 is a perspective view of a major part of the electricity generating apparatus according to an embodiment of the present invention.

As shown in FIGS. 1 and 2, the electricity generating apparatus includes a turbine shaft 110, formed in a vertical direction, for transferring a rotational force toward a generator 170 while being rotated.

A plurality of supports 140 are connected to the turbine shaft 110. One end of each of the supports 140 is connected with the turbine shaft 110, and an internal fixed plate 120 and an external fixed plate 130 are formed at regular intervals at the other end of each of the supports 140. The supports 140, the internal fixed plate 120, and the external fixed plate 130 constitute a single turbine 180.

A plurality of turbine blades 150 are formed between the internal fixed plate 120 and the external fixed plate 130. The turbine shaft 110 is rotated by using the rising bubbles jetted from a diffuser 230 and the force of water stream. The generator 170 is connected with a driving gear 160 formed at an upper end of the turbine shaft 110 and produces and generates power when the turbine shaft 110 makes a rotational movement.

The configured electricity generating apparatus can be operated by the diffuser used for purifying the quality water in an area with a certain water level such as a water tank, a farm, a wastewater treatment plant, a lake, or the like, to generate electricity and purify the quality of water.

The electricity generating apparatus according to the present invention is installed in the water purifying apparatus. The water purifying apparatus includes a blower 200 for sucking external air, an air pipe 210, connected with the blower 200, for supplying air sucked through the blower to an air distribution container 220, and a diffuser 230, formed with a certain length at the side of the air distribution container 220, for discharging air to the underwater through the air distribution container 220 to supply oxygen to purify the quality of water.

The circuitry relations to which the general water purifying apparatus and the electricity generating apparatus 100 are electrically connected are widely known, so a detailed description will be omitted.

In an embodiment of the present invention, the electricity generating apparatus 100 is operated with bubbles rising to the surface of the water when the bubbles are jetted from the diffuser 230 to induce a fluid flow and the water stream. It should be, however, understood that the present invention is not limited to the embodiment. The electricity generating apparatus can also be installed and used in every apparatus so long as it purifies the quality of water while generating bubbles.

With such a configuration, when external air introduced via the blower 200 is supplied to the air distribution container 220 through the air pipe 210, the air distribution container 220 supplies air underwater through the diffuser 230. Then, bubbles are generated from the air which has been supplied underwater and these bubbles rise up, inducing a fluid flow.

When the rising bubbles and water stream rotate the turbine 180 and the turbine shaft 110 while passing through the turbine blades 150, the driving gear 160 is rotated, and at this time, the generator 170 connected with the rotating driving gear 160 produces and generates power. The generated electric energy can be re-used as energy for purifying the quality of water or can be re-used as energy for peripheral devices and, at the same time, perform water purification.

As described above, the electricity generating apparatus, according to the exemplary embodiment of the present invention, can be connected with a diffuser for purifying the quality of water in an area with a certain depth of water such as rivers, lakes, farms, wastewater treatment plants, etc. When the diffuser operates, the electricity generating apparatus can generates electricity by bubbles and buoyancy of a water stream, and thus supply the produced electricity to the diffuser, so that the diffuser can purify the quality of water.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. An electricity generating apparatus comprising:
a turbine shaft installed in a vertical direction;
a cylindrical turbine including supports, one end of each of the supports being connected with the turbine shaft, and an internal fixed plate and an external fixed plate being formed at regular intervals at the other end of each of the supports;
a plurality of turbine blades, formed between the internal fixed plate and the external fixed plate, for rotating the turbine shaft by using the rise of bubbles jetted from the diffuser and the force of water stream; and
a generator, connected with a driving gear formed at an upper end of the turbine shaft, for generates electricity when the turbine shaft is rotated,
wherein the electricity generating apparatus is operated by the diffuser used for purifying the quality of water in a water tank, a farm, a wastewater treatment plant, a lake, etc., to generate electricity and purify the quality of water.
